# EUROPÄISCHE PATENTSCHRIFT

(11) **EP 1 153 879 B1**
(45) Veröffentlichungstag und Bekanntmachung des Hinweises auf die Patenterteilung: **12.07.2006**
(21) Anmeldenummer: 01108096.7
(22) Anmeldetag: 30.03.2001
(51) Int. Cl.: B66F 9/07, B65G 1/04

(54) **Bedienvorrichtung für ein Hochregallager und damit ausgestattetes Hochregallager**
Material handling apparatus for a warehouse with storage racks and warehouse equipped with such apparatus
Appareil de manutention pour desservir des rayonnages d' un magasin de stockage et magasin de stockage équipé d' un tel appareil

(30) Priorität: 12.05.2000 DE 20008628 U
(43) Veröffentlichungstag der Anmeldung: 14.11.2001
(73) Patentinhaber: H + H Herrmann + Hieber GmbH, 73770 Denkendorf (DE)
(72) Erfinder: Wagner, Hans, Dipl.-Ing., 73730 Esslingen (DE)
(74) Vertreter: Reimold, Otto

(56) Entgegenhaltungen:
- DE-A- 4 028 059
- DE-B- 1 295 478
- DE-U- 29 909 327
- US-A- 4 035 904
- US-A- 4 466 765
- US-A- 6 042 321

## Beschreibung

Die vorliegende Erfindung betrifft eine Bedienvorrichtung für ein Hochregallager, mit zwei einen Bedienraum für mindestens ein Hochregal endseitig begrenzenden vertikalen Säulen, mit einer sich entlang des mindestens einen Hochregals erstreckenden Traverse, die zwischen den Säulen angeordnet, an den Säulen geführt und in Vertikalrichtung entlang den Säulen durch einen Traversenantrieb angetrieben vertikal verfahrbar ist, mit einem Schlitten, der entlang der Traverse in Längsrichtung durch einen Schlittenantrieb verfahrbar ist, und mit einer an dem Schlitten angeordneten, in Querrichtung mittels eines Querantriebs ein- und ausfahrbar ausgebildeten Aufnehmereinrichtung zum Aufnehmen und Ablegen von Gütern im Hochregal sowie ein damit ausgestattetes Hochregallager.

Beispielsweise ist aus dem Deutschen Gebrauchsmuster DE 299 09 327 ein derartiges Regallager bekannt. Das bekannte Regallager dient zur Lagerung kleinerer Stückgüter, insbesondere auch im Bereich von Verkaufsräumen. Es ist für einen geräuscharmen Betrieb ausgelegt und hat beispielsweise Riemenantriebe zum Antrieb des Schlittens.

Hochregallager dienen der platzsparenden Aufbewahrung von Gütern im Bereich von Industrie und Logistik. Dabei werden die Güter durch eine Bedienvorrichtung in ein Hochregal einsortiert und aus diesem wieder entnommen. Die Bedienvorrichtung soll dabei präzise und schnell bei möglichst geringem Energieverbrauch arbeiten.

Es ist Aufgabe der vorliegenden Erfindung, eine Bedienvorrichtung sowie ein Hochregallager zu schaffen, die jeweils kompakt, stabil und platzsparend sind.

Zur Lösung dieser Aufgabe ist bei einer Bedienvorrichtung für ein Hochregallager der eingangs genannten Art vorgesehen, dass die Säulen eine wandartige Gestalt aufweisen.

Das erfindungsgemäße Hochregallager enthält diese Bedienvorrichtung und ein oder zwei einerseits bzw. beiderseits des Bedienraums neben der Traverse angeordnete Hochregale.

Die beiden Säulen und die an ihnen geführte Traverse ergeben eine stabile, mit mehreren Gütern belastbare Bedienvorrichtung. Die beiden Säulen mit der Traverse bilden ferner eine kompakte Einheit, die sich schnell und ohne Schwierigkeiten am Aufstellort montieren lässt. Dabei bleibt der Boden des Bedienraums frei.

Zur Anpassung der Bedienvorrichtung an die Länge und Höhe des mindestens einen Hochregals muss lediglich die Länge der Traverse bzw. die Länge der Säulen angepasst werden.

Das Hochregal kann somit auch in beengter Umgebung, beispielsweise in Fabrikationshallen, aufgebaut werden.

Der Schlittenantrieb ist vorzugsweise ein Ketten- oder Seilzugantrieb, so dass die bewegten Massen gering gehalten werden.

Die Aufnehmereinrichtung ist zweckmäßigerweise teleskopartig ausfahrbar, so dass das beim Verfahren der Traverse oder des Schlittens nur wenig Platz gebraucht wird.

Eine besonders kompakte und stabile Einheit erhält man, wenn zumindest eine Säule der Bedienvorrichtung mit einem Gestellbauteil des mindestens einen Hochregals fest verbunden ist.

In einer zweckmäßigen Variante bildet zumindest eine der Säulen der Bedienvorrichtung eine endseitige Querwand des Hochregallagers.

Ferner kann man zumindest ein Hochregel so ausbilden und anordnen, dass es einen bodenseitigen Zugang zum Bedienraum frei lässt. Es ist sogar möglich, die unterste Lager-Etage eines oder beider Hochregale in einer solchen Höhe anzuordnen, dass darunter nicht nur ein Zugang zum Bedienraum sondern auch ein Arbeitsbereich, beispielsweise für eine Werkzeugmaschine, eine Person oder dergleichen angeordnet ist.

Im Folgenden werden die Erfindung und ihre Vorteile anhand eines Ausführungsbeispiels erläutert. Es zeigen:

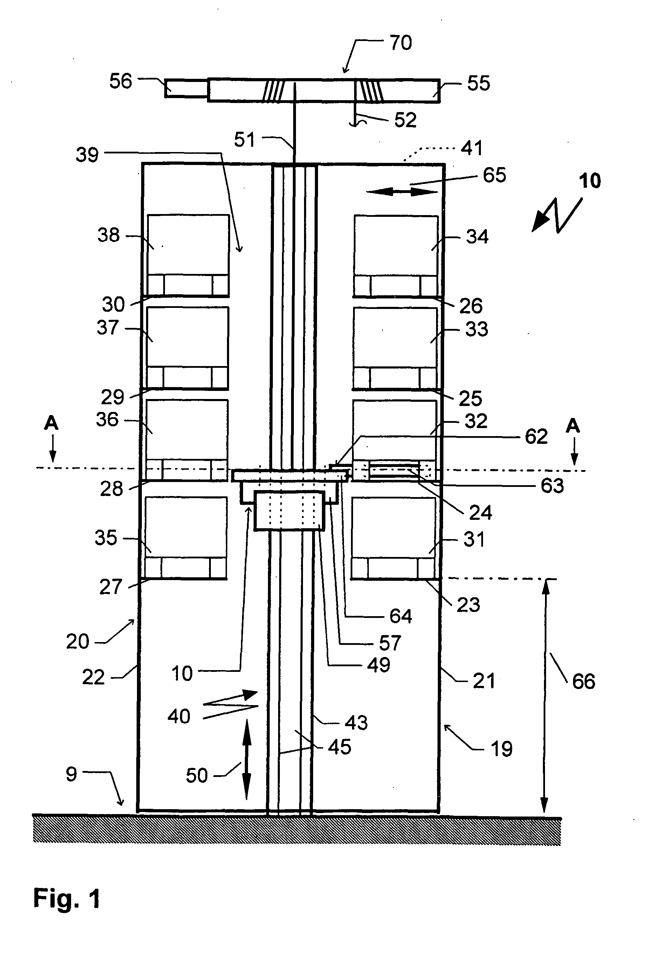

- Figur 1: eine schematische Seitenansicht eines Hochregallagers und
- Figur 2: einen schematischen Horizontalschnitt gemäß Schnittlinie A-A des Hochregallagers nach Figur 1.

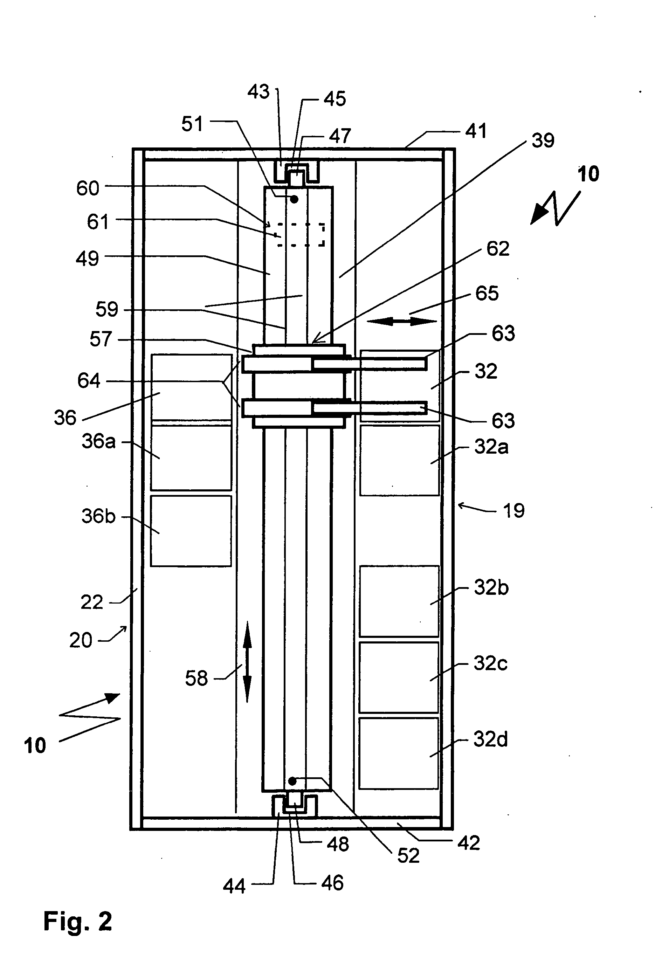

Von einem Hochregallager 10 sind zwei parallel zueinander angeordnete Hochregale 19, 20 mit jeweils einer sich in Regal-Längsrichtung 58 erstreckenden, senkrecht auf einer Bodenfläche 9 stehenden Tragwand 21 bzw. 22 gezeigt. Die Tragwände 21 und 22 sind beispielsweise als Rahmen- oder Gitterstruktur aus Stahl ausgebildet. Die Tragwand 21 trägt horizontal von ihr abstehende Etagenböden 23 bis 26. Von der Tragwand 22 stehen horizontal Etagenböden 27 bis 30 ab. Die Etagenböden 23 bis 30 bilden in Längsrichtung 58 aufeinanderfolgende Abstellplätze. Auf den Etagenböden 23 bis 26 und 27 bis 30 lasten an den Abstellplatzen Transportcontainer 31 bis 38 zur Aufnahme von zu lagernden Gütern. In Figur 2 wurden die in der dargestellten Ebene vorhandenen, nur zum Teil dargestellten Transportcontainer mit den Bezugsziffern 32 und 32a bis 32d bzw. 36, 36a, 36b bezeichnet. Die Etagenböden 23 bis 26 und 27 bis 30 sind einander zugewandt und begrenzen einen Bedienraum 39, von dem aus die Transportcontainer 31 bis 38 von den Etagenböden 23 bis 26 und 27 bis 30 entnommen oder auf diese gestellt werden können.

Im Bedienraum 39 ist mittig zwischen den Hochregalen 19, 20 eine Bedienvorrichtung 40 angeordnet, die den Bedienraum 39 endseitig begrenzende vertikale Säulen 41, 42 enthält. Die Säulen 41, 42 weisen eine wandartige Gestalt auf und bilden jeweils eine endseitige Querwand des Hochregallagers 10. Dabei sind die Säulen 41, 42 mit Gestellbauteilen der Hochregale 19, 20 fest verbunden, die beim Ausführungsbeispiel von den Tragwänden 21, 22 gebildet werden, so dass sich ein rechteckiger Umriss des Hochregellagers 10 ergibt. Mittig an ihrer dem Bedienraum 39 zugewandten Seite weisen die Säulen 41, 42 senkrecht stehende Führungseinrichtungen 43 bzw. 44 beispielsweise mit Führungs-Nuten 45 bzw. 46 auf. An den Führungseinrichtungen 43, 44 ist eine im Ausführungsbeispiel als Tragbalken ausgeführte Traverse 49 geführt, z.B. indem an der Traverse 49 angeordnete Führungsvorsprünge 47, 48 in die Führungsnuten 45, 46 eingreifen. Die Traverse 49 ist zwischen den Säulen 41, 42 angeordnet und in Vertikalrichtung 50 entlang den Säulen 41, 42 vertikal verfahrbar.

Die Traverse 49 wird durch einen Traversenantrieb 70 angetrieben, der vorliegend als Seilzugantrieb ausgestaltet ist, jedoch beispielsweise auch ein Zahnstangen- oder sonstiger Linearantrieb sein könnte. Von dem Traversenantrieb 70 ist eine der Übersichtlichkeit wegen oberhalb des Hochregallagers gezeichnete Baugruppe lediglich schematisch angedeutet. Die Traverse 49 ist endseitig an Seilen 51 und 52 aufgehängt, die auf eine durch einen Motor 56 angetriebene Trommel 55 aufgewickelt oder von dieser abgewickelt werden, so dass die Traverse 49 vertikal verfahren und jeweils den Etagen der Hochregale 19 und 20 gegenüberliegend positioniert werden kann.

Entlang der Traverse 49 ist ein Schlitten 57 in der Traversen-Längsrichtung entsprechender Längsrichtung 58 der Bedienvorrichtung 40 verfahrbar angeordnet. Im Ausführungsbeispiel umgreift der Schlitten 57 die Traverse 49 U-artig von oben her. Es sind jedoch auch anders gestaltete Führungen möglich. Der Schlitten 57 wird durch einen vorliegend als Ketten- oder Seilzugantrieb ausgeführten Schlittenantrieb 60 angetrieben, dessen nur schematisch angedeutete Kette oder Seil 59 am Schlitten 57 befestigt ist, während sein Antriebsmotor 61 an die Traverse 49 angebaut ist. Der Schlittenantrieb könnte prinzipiell auch beispielsweise durch einen Linearmotor oder einen Spindelantrieb gebildet werden. Durch den Schlittenantrieb 60 ist der Schlitten 57 in Bedien-Längsrichtung 58 den in der jeweiligen Etage abgestellten Transportcontainern 32 bis 32d und 36 bis 36b gegenüberliegend positionierbar.

In dem in den Figuren gezeigten Zustand sind die Traverse 49 und der Schlitten 57 in eine Stellung gegenüber dem Transportcontainer 32 positioniert, in der eine an dem Schlitten 57 angeordnete, als Aufnehmereinrichtung dienende Gabelvorrichtung 62 unter den Transportcontainer 32 greifen kann. Die Gabelvorrichtung 62 weist Gabelarme 63 auf, die im Ausführungsbeispiel als teleskopierbare Gabelarme ausgeführt sind und aus feststehend am Schlitten 57 angeordneten Gabelrinnen 64 oder einer anderen Lagerung durch einen nicht dargestellten Querantrieb der Aufnahmeeinrichtung sowohl zum Hochregal 19 als auch zum Hochregal 20 hin in Bedien-Querrichtung 65 ausfahrbar sind. Andere Bauformen der Aufnahmevorrichtung 62 sind möglich, beispielsweise mit teleskopartig oder im Ganzen ausfahrbaren Platten oder dergleichen. Ferner könnte als Aufnehmereinrichtung auch eine Greifvorrichtung vorgesehen sein.

Die Figuren zeigen die Gabelvorrichtung 62 in ausgefahrenem Zustand, wobei die Gabelarme 63 unter den Transportcontainer 32 greifen. Anschließend an den gezeigten Zustand bewegen sich die Gabelarme 63 etwas nach oben, so dass der Transportcontainer 32 von dem Etagenboden 24 abgehoben wird, wonach die Gabelvorrichtung 62 wieder zurück in den Bedienraum 39 bewegt wird, so dass der Schlitten 57 und die Traverse 49 verfahren werden können. Die Traverse kann dann beispielsweise zur Bodenfläche 9 hin abgesenkt werden, so dass der Transportcontainer 32 von der Gabelvorrichtung 62 weggenommen werden kann.

Insbesondere in den Tragwänden 21 und 22 können auch Durchgänge vorgesehen sein, die einen Zugang zum Bedienraum 39 erlauben. Im Ausführungsbeispiel sind die jeweils untersten Etagenböden 23 und 27 der beiden Hochregale 19, 20 in einer Höhe 66 zur Bodenfläche 9 angeordnet, so dass unterhalb der Etagenböden 23 und 27 eine für einen Bediener nutzbare Verkehrsfläche geschaffen wird. Prinzipiell wäre es auch möglich, dass die Tragwände 21 und 22 nicht, wie dargestellt, auf die Grundfläche 9 gestellt sind, sondern an den Säulen 41 und 42 aufgehängt sind, so dass sich der Durchgang über die ganze Regallänge erstreckt.

Von den beiden Hochregalen 19, 20 könnte auch eines fehlen.

## Patentansprüche

1. Bedienvorrichtung für ein Hochregallager (10), mit zwei einen Bedienraum (39) für mindestens ein Hochregal (19, 20) endseitig begrenzenden vertikalen Säulen (41, 42), mit einer sich entlang des mindestens einen Hochregals (19, 20) erstreckenden Traverse (49), die zwischen den Säulen (41, 42) angeordnet, an den Säulen 41, 42) geführt und in Vertikalrichtung (50) entlang den Säulen (41, 42) durch einen Traversenantrieb (70) angetrieben vertikal verfahrbar ist, mit einem Schlitten (57), der entlang der Traverse (49) in Längsrichtung (58) durch einen Schlittenantrieb (60) verfahrbar ist, und mit einer an dem Schlitten (57) angeordneten, in Querrichtung (65) mittels eines Querantriebs ein- und ausfahrbar ausgebildeten Aufnehmereinrichtung (62) zum Aufnehmen und Ablegen von Gütern (31 bis 38) im Hochregal (19, 20), **dadurch gekennzeichnet, dass** die Säulen (41, 42) eine wandartige Gestalt aufweisen.

2. Bedienvorrichtung nach Anspruch 1, **dadurch gekennzeichnet, dass** die Aufnehmereinrichtung (62) teleskopartig ausfahrbar ist.

3. Bedienvorrichtung nach Anspruch 1 oder 2, **dadurch gekennzeichnet, dass** der Schlittenantrieb (60) ein Ketten- oder Seilzugantrieb ist.

4. Hochregallager mit einer Bedienvorrichtung (40) nach einem der vorhergehenden Ansprüche und einem oder zwei einerseits bzw. beiderseits des Bedienraumes (39) neben der Traverse (49) angeordneten Hochregalen (19, 20).

5. Hochregallager nach Anspruch 4, **dadurch gekennzeichnet, dass** zumindest eine Säule (41, 42) der Bedienvorrichtung (40) mit einem Gestellbauteil (21, 22) des mindestens einen Hochregals (19, 20) verbunden ist.

6. Hochregallager nach Anspruch 4 oder 5, **dadurch gekennzeichnet, dass** zumindest eine der Säulen (41, 42) eine endseitige Querwand des Hochregallagers (10) bildet.

7. Hochregallager nach einem der Ansprüche 4 bis 6, **dadurch gekennzeichnet, dass** mindestens ein Hochregal (19, 20) einen bodenseitigen Zugang zum Bedienraum (39) frei lässt.

## Claims

1. Operating device for a high-rise warehouse (10), with two vertical columns (41, 42) bounding an operating space (39) for at least one high-rise rack (19, 20) at the end, with a crossmember (49) extending along the at least one high-rise rack (19, 20), which is located between the columns (41, 42), guided on the columns (41, 42) and vertically movable along the columns (41, 42) when driven by a crossmember drive (70), with a carriage (57) movable along the crossmember (49) in the longitudinal direction (58) by means of a carriage drive (60), and with a pick-up device (62) mounted on the carriage (57) and retractable and extendable in the transverse direction (65) by means of a transverse drive for picking and placing goods (31 to 38) in the high-rise rack (19, 20), **characterised in that** the columns (41, 42) have a wall-like shape.

2. Operating device according to claim 1, **characterised in that** the pick-up device (62) is designed telescopic.

3. Operating device according to claim 1 or 2, **characterised in that** the carriage drive (60) is a chain or cable drive.

4. High-rise warehouse with an operating device (40) according to any of the preceding claims and with one or two high-level racks (19, 20) arranged on one side or both sides of the operating space (39) adjacent to the crossmember (49).

5. High-rise warehouse according to claim 4, **characterised in that** at least one column (41, 42) of the operating device (40) is connected to a rack component (21, 22) of the at least one high-level rack (19, 20).

6. High-rise warehouse according to claim 4 or 5, **characterised in that** at least one of the columns (41, 42) forms a transverse end wall of the high-rise warehouse (10).

7. High-rise warehouse according to any of claims 4 to 6, **characterised in that** at least one high-rise rack (19, 20) leaves a floor access to the operating space (10) free.

## Revendications

1. Appareil de manutention pour un magasin à rayonnages (10), avec deux colonnes verticales (41, 42) limitant à l'extrémité un espace de desserte (39) pour au moins un rayonnage (19, 20), avec une traverse (49) s'étendant le long d'au moins un rayonnage (19, 20), traverse qui est placée entre les colonnes (41, 42), est guidée sur les colonnes (41, 42) et est mobile dans la direction verticale (50) le long des colonnes (41, 42) en étant motorisée par un entraînement de traverse (70), avec un chariot (57) qui peut être déplacé le long de la traverse (49) dans la direction longitudinale (58) par un entraînement de chariot (60), et avec un dispositif récepteur (62) placé sur le chariot (57) et étant réalisé de façon rétractable et extractible dans la direction transversale (65) au moyen d'un entraînement transversal pour recevoir et déposer des marchandises (31 à 38) sur le rayonnage (19, 20), **caractérisé en ce que** les colonnes (41, 42) présentent la forme d'une paroi.

2. Appareil de manutention selon la revendication 1, **caractérisé en ce que** le dispositif récepteur (62) est extractible de manière télescopique.

3. Appareil de manutention selon la revendication 1 ou 2, **caractérisé en ce que** l'entraînement de chariot (60) est un entraînement à chaîne ou à câble.

4. Magasin à rayonnages avec un appareil de manutention (40) selon l'une des revendications précédentes et avec un ou deux rayonnages (19, 20) placés d'un côté resp. des deux côtés de l'espace de desserte (39) à côté de la traverse (49).

5. Magasin à rayonnages selon la revendication 4, **caractérisé en ce qu'**au moins une colonne (41, 42) du dispositif de manutention (40) est reliée à un élément formant châssis (21, 22) de l'au moins un rayonnage (19, 20).

6. Magasin à rayonnages selon la revendication 4 ou 5, **caractérisé en ce qu'**au moins l'une des colonnes (41, 42) forme une paroi transversale d'extrémité du magasin à rayonnages (10).

7. Magasin à rayonnages selon l'une des revendications 4 à 6, **caractérisé en ce qu'**au moins un rayonnage (19, 20) laisse libre un accès côté sol à l'espace de desserte (39).
